# EUROPEAN PATENT APPLICATION

(11) **EP 4 373 055 A1**
(43) Date of publication of application: **22.05.2024**
(21) Application number: 21949708.8
(22) Date of filing: 16.07.2021
(51) Int. Cl.: H04L 51/21

(54) **DATA TRANSMISSION METHOD, DATA TRANSMISSION APPARATUS, AND STORAGE MEDIUM**

(71) Applicant: Beijing Xiaomi Mobile Software Co., Ltd., Beijing 100085 (CN)
(72) Inventor: CHEN, Dong, Beijing 100085 (CN)
(74) Representative: dompatent von Kreisler Selting Werner - Partnerschaft von Patent- und Rechtsanwälten mbB
(86) International application number: PCT/CN2021/106725
(87) International publication number: WO 2023/283924

(57) **Abstract**

The present disclosure relates to a data transmission method, a data transmission apparatus, and a storage medium. The data transmission method is applied to a data sending end. The method comprises: determining IP data to be transmitted, and determining a plurality of IP datagrams for transmitting the IP data and a header of the plurality of IP datagrams, wherein the header comprises a sending sequence of the plurality of IP datagrams; and sending the plurality of IP datagrams on the basis of the sending sequence. By means of the present disclosure, the data transmission efficiency can be improved.

## Description

### TECHNICAL FIELD

The present disclosure relates to the field of communication technology, and in particular, to a method for transmitting data, a device for transmitting data and a storage medium.

### BACKGROUND

In wireless environments, an IP datagram may be discarded during the transmission of Internet Protocol (IP) data packets. For example, some IP datagrams are lost due to transmission failure or are not valid due to excessive transmission delay.

When a service has a large data volume to be transmitted, there needs a plurality of IP datagrams. In the case where not all of the IP datagrams, among the plurality of IP datagrams, in which critical data are located have been sent successfully, then other IP datagrams, even if they have been sent successfully, have to be discarded, resulting in a low IP datagram transmission efficiency.

### SUMMARY

In order to overcome the problem in the related art, the present disclosure provides a method for transmitting data, a device for transmitting data and a storage medium.

A first aspect of embodiments of the present disclosure provides a method for transmitting data, which is applied to a data sending side. The method includes:
determining IP data to be transmitted and determining a plurality of IP datagrams for transmitting the IP data and headers of the plurality of IP datagrams, the headers including a sending sequence of the plurality of IP datagrams; and sending the plurality of IP datagrams based on the sending sequence.

In an implementation, determining the plurality of IP datagrams and the headers of the IP datagrams based on the generated data includes:
obtaining first IP data and second IP data by classifying the IP data to be transmitted according to importance of the IP data, the importance of the first IP data being greater than the importance of the second IP data; placing the first IP data in a first number of IP datagrams and adding a first identification to the headers, the first identification being configured to indicate that the IP data included in the IP datagram is the first IP data; and placing the second IP data in a second number of IP datagrams and adding a second identification to the headers, the second identification being configured to indicate that the IP data included in the IP datagram is the second IP data.

In an implementation, the sending sequence of the plurality of IP datagrams includes that:
the IP datagram with the header including the first identification is sent before the IP datagram with the header including the second identification.

In an implementation, the method further includes:
abandoning, in response to determining that not all of the IP datagrams including the first identification have been successfully sent, sending the IP datagram with the header including the second identification; and determining IP datagrams corresponding to next IP data to be transmitted and sequentially sending the IP datagrams based on the identification including in the header.

In an implementation, a first portion of the header includes a character for indicating the first identification or the second identification.

In an implementation, the header further includes at least one of a number of the plurality of IP datagrams or a number of IP datagrams transmitting important data.

A second aspect of embodiments of the present disclosure provides a device for transmitting data, which is applied to a data sending side. The device includes:
a determining module, configured to determine IP data to be transmitted and determine a plurality of IP datagrams for transmitting the IP data and headers of the plurality of IP datagrams, the headers including a sending sequence of the plurality of IP datagrams; and a sending module, configured to send the plurality of IP datagrams based on the sending sequence.

In an implementation, the determining module is configured to:
obtain first IP data and second IP data by classifying the IP data to be transmitted according to importance of the IP data, the importance of the first IP data being greater than the importance of the second IP data; place the first IP data in a first number of IP datagrams and add a first identification to the headers, the first identification being configured to indicate that the IP data included in the IP datagram is the first IP data; and place the second IP data in a second number of IP datagrams and add a second identification to the headers, the second identification being configured to indicate that the IP data included in the IP datagram is the second IP data.

In an implementation, the sending module is configured such that:
the IP datagram with the header including the first identification is sent before the IP datagram with the header including the second identification.

In an implementation, the sending module is further configured to:
abandon, in response to determining that not all of the IP datagrams including the first identification have been successfully sent, sending the IP datagram with the header including the second identification; and determine IP datagrams corresponding to next IP data to be transmitted and sequentially send the IP datagrams based on the identification including in the header.

In an implementation, a first portion of the header includes a character for indicating the first identification or the second identification.

In an implementation, the header further includes at least one of a number of the plurality of IP datagrams or a number of IP datagrams transmitting important data.

A third aspect of embodiments of the present disclosure provides a device for transmitting data, including:
a processor; and a memory for storing executable instructions of the processor, wherein the processor is configured to perform the method for transmitting data according to the first aspect or any implementation of the first aspect.

A fourth aspect of embodiments of the present disclosure provides a non-transitory computer-readable storage medium. When instructions in the storage medium are executed by a processor of a mobile terminal, the mobile terminal is caused to perform the method for transmitting data according to the first aspect or any implementation of the first aspect.

The technical solution provided by the embodiments of the present disclosure may have the following advantageous effects.

By determining IP datagrams for transmitting IP data and headers of the IP datagrams, a sending sequence of the IP datagrams is determined, and the IP datagrams are sent based on the sending sequence determined. The IP data packets are sent based on the sequence, so that it may stop sending a subsequent IP data packet when a data packet transmitted currently is not sent successfully, may continue to send a next IP data packet after the data having a sending priority have been sent successfully in a timely and accurate manner, and may determine to discard the subsequent data packets when the data having the sending priority have not been sent successfully timely, which can improve the transmitting efficiency of the IP data packet, and may effectively prevent the transmission of invalid IP data packets from resulting in wasting of transmission resource.

It should be understood that the above general description and the following detailed descriptions are exemplary and explanatory only and do not limit the present disclosure.

### BRIEF DESCRIPTION OF THE DRAWINGS

The accompanying drawings herein, which are incorporated into and form a part of the specification, illustrate embodiments consistent with the present disclosure, and serve, in conjunction with the specification, to explain the principles of the present disclosure.
FIG. 1 is a schematic diagram of an IP datagram format according to an exemplary embodiment.
FIG. 2 is a diagram of a communication system architecture between a network device and a terminal according to an exemplary embodiment.
FIG. 3 is a flowchart of a method for transmitting data according to an exemplary embodiment.
FIG. 4 is a flowchart of another method for transmitting data according to an exemplary embodiment.
FIG. 5 is a flowchart of yet another method for transmitting data according to an exemplary embodiment.
FIG. 6 is a block diagram of a device for transmitting data according to an example embodiment.
FIG. 7 is a block diagram for a device for transmitting data according to an example embodiment.
FIG. 8 is a block diagram of another device for transmitting data according to an example embodiment.

### DETAILED DESCRIPTION

Exemplary embodiments will be described herein in detail, examples of which are represented in the accompanying drawings. When the following description relates to the accompanying drawings, the same reference numerals in the different accompanying drawings indicate the same or similar elements unless otherwise indicated. The implementations described in the following exemplary embodiments do not represent all embodiments consistent with the present disclosure. Rather, they are only examples of devices and methods consistent with some aspects of the present disclosure as detailed in the appended claims.

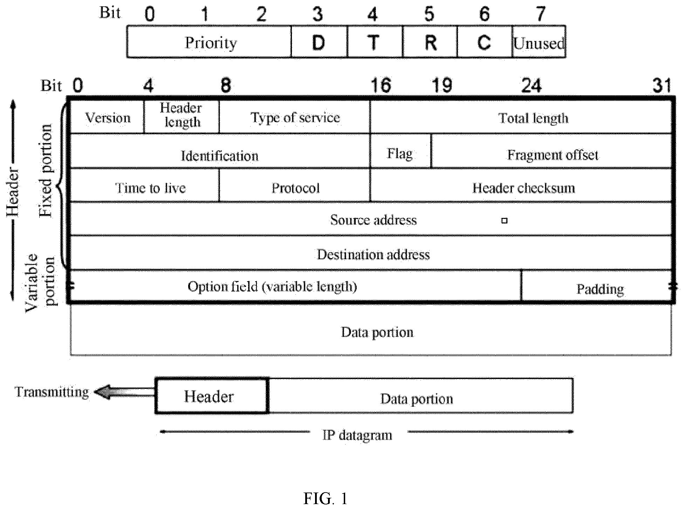

The IP protocol may be used in the Internet field for various data transmissions, and may also be used in the mobile communication field. The protocol unit, with which the IP protocol controls transmission, is referred to as an IP datagram (IP packet or IP grouping). Since the IP protocol shields differences between various physical sub-networks at a lower layer, it can provide an upper layer with IP datagrams with a uniform format. The IP datagram uses a datagram grouping transmission manner and provides a connectionless service. The format of the IP datagram identifies the functionality of the IP data packet protocol. For example, the IPv4 datagram consists of two parts, i.e., header and data, where the data is data that need to be transmitted at the upper layer and the header is control information that is added in order to correctly transmit the upper layer data. The first portion of the header is a fixed length of 20 bytes and is required for all IP datagrams. Following the fixed portion in the header is an option field that is variable in length. FIG. 1 is a schematic diagram of an IP datagram format according to an exemplary embodiment. As shown in FIG. 1, the fixed portion includes version, header length, differentiated service, total length, identification, flag, fragment offset, time to live, protocol, header checksum, source address and destination address.

### (1) Version

The version occupies 4 bits, and specifies the version of IP protocol. The IP protocol versions used by both sides of communication must be the same. The widely used IP protocol version number is 4 (i.e., IPv4).

### (2) Header length

The header length occupies 4 bits and may represent a maximum decimal value of 15. It should be noted that the unit of the number represented by this field is a 32-bit word length (one 32-bit word length is 4 bytes), therefore when the header length of the IP is 1111 (i.e., 15 in decimal), the header length is 60 bytes. When the header length of the IP grouping is not an integer multiple of 4 bytes, it needs to be padded by the padding field in the last portion. Therefore, the data portion always starts at an integer multiple of 4 bytes, which is convenient when implementing the IP protocol. The disadvantage of the limiting header length of 60 bytes is that it may sometimes be insufficient, however, this may make the user minimize the overhead. The header length which is most commonly used is 20 bytes (i.e., the header length is 0101), and at this time, no options are used.

### (3) Differentiated service

The differentiated service occupies 8 bits and is used to obtain a better service. It may also be referred to as a type of service. This field is used when differentiated services are used.

### (4) Total length

The total length refers to the length of the sum of the header and data, and the unit thereof is byte. The total length field is 16 bits, and thus the maximum length of the datagram is 2^16-1=65535 bytes.

Each data link layer below the IP layer has its own frame format, which includes the maximum length of the data field in the frame format, which is called the maximum transfer unit (MTU). When a datagram is encapsulated into a link layer frame, the total length of the datagram (i.e., the sum of the header and the data portion) must not exceed the MTU value of the data link layer below.

### (5) Identification

The identification occupies 16 bits. An IP software maintains a counter in a memory, and every time a datagram is generated, the counter is incremented by 1, and this value is assigned to the identification field. However, the "identification" is not a serial number, because IP is a connectionless service, and is not received in sequence. When the datagram must be fragmented because it is longer than the network's MTU, the value in the identification field is copied to the identification fields of all datagrams. By using the same identification field value, the fragmented datagram fragments can be correctly reassembled into the original datagram.

### (6) Flag

The flag occupies 3 bits, of which 2 bits have significance.

The lowest bit in the flag field is recorded as MF (more fragment). MF=1 means that there is a following datagram that is "still fragmented", and MF=0 means that this is the last of a number of datagram fragments. A middle bit in the flag field is recorded as DF (Don't Fragment), meaning "cannot be fragmented". The fragmentation is allowed only when DF=0.

### (7) Fragment offset

The fragment offset occupies 13 bits. The fragment offset specifies the relative position of a fragment in an original group after a longer group is fragmented and where the fragment starts relative to the start of the user data field. The fragment offset has an offset unit of 8 bytes, that is, except for the last fragment, each fragment must be an integer multiple of 8 bytes (64 bits) in length.

### (8) Time to live

The time to live occupies 8 bits. The time to live field is commonly known by the acronym TTL, which indicates the lifetime of the datagram in the network. This field is set by the source point sending the datagram, in order to prevent undeliverable datagrams from circling in the Internet indefinitely and thus consuming network resources. The original design used a second as the unit of TTL. The period of time the datagram consumed at the router is subtracted from the TTL whenever the datagram passes through the router. If the time consumed at the router is less than 1 second, the TTL value is reduced by 1. When the TTL value is 0, the datagram is discarded. The function of the TTL field was later changed to "hop limit" (but the name remains the same). The router reduces the TTL value by 1 before forwarding the datagram, and if the TTL value decreases to zero, the datagram is discarded and not forwarded. Therefore, the unit of TTL is no longer seconds, but hops. The TTL is to indicate how many routers the datagram can at least pass through in the network. Obviously, the maximum number of routers that the datagram can pass through in the network is 255. If the initial value of TTL is set to 1, it means that the datagram can only be transmitted in the local area network.

### (9) Protocol

The protocol occupies 8 bits. The protocol field indicates which protocol is used for the data carried by this datagram, so that the IP layer of the destination host knows to which process the data portion should be submitted.

### (10) Header checksum

The header checksum occupies 16 bits. This field checks only the header of the datagram, but not the data portion. Every time the datagram passes through a router, the router has to recalculate the header checksum (including some fields, for example, time to live, flag, fragment offset and the like may change). If the data portion is not checked, it can reduce the workload of calculation.

### (11) Source address

The source occupies 32 bits.

### (12) Destination address

The destination address occupies 32 bits.

### Variable portion

The variable portion of the IP header is an option field. The option field is used to support measures such as troubleshooting, measurement, and security. The length of this field is variable, ranging from 1 byte to 40 bytes, which depends on the item selected. Some option items require only 1 byte, which includes only 1 byte of option code. But there are other options that require more than one byte, and these options are spliced together one by one without a separator therebetween, and finally made up to an integer multiple of 4 bytes with an all 0 padding field.

The variable portion of the header is provided to increase the functionality of the IP datagram, but this also makes the length of the header of the IP datagram variable. This increases the overhead of processing the datagram at each router. The new IP version, IPv6, makes the length of the header of the IP datagram fixed. These options are defined as follows:
(1) security and processing restriction (used in the military domain);
(2) record path (so that each router records its IP address);
(3) time stamp (so that each router records the IP address and local time of each router that the IP datagram passes through);
(4) loose source route (assigning a series of IP addresses that the datagram must pass through); and
(5) strict source route (similar to the loose source route, but requires that the datagram can only pass through these specified addresses and cannot pass through other addresses).

In the wireless environment of communication technology, the IP data packet may be lost during the transmission thereof. For example, in the case where data is transmitted from a network device to a terminal, not all IP data packets may reach the terminal, where a portion of the IP data packets are lost and thus cannot reach the terminal due to excessive transmission delay, invalidation of IP data packet or the like.

For example, for a real-time video service, after data of an image frame on a screen is generated, the data need to be transmitted through a plurality of IP data packets, and the plurality of IP data packets need to arrive at the receiving terminal within the time that the image is displayed. If the plurality of IP data packets corresponding to the image frame does not arrive at the receiving terminal within the display time, it is determined that the plurality of IP data packets are invalidated because they cannot be displayed. Furthermore, the IP data packets required for the image frame include critical IP data packets, i.e., the critical IP data packet must reach the receiving terminal in order to display the image frame. If the critical IP data packet does not reach the receiving terminal, it is determined that the image frame cannot be displayed and the other IP data packets need to be discarded. The other IP data packets may be non-critical IP packets.

In some services, a plurality of IP data packets for transmitting data are determined according to the data to be transmitted. In order to improve data transmission efficiency, the present disclosure provides a method for transmitting data. In the method for transmitting data in the present disclosure, the critical data of the data to be transmitted are placed in the first few IP data packets to be sent preferentially. If the IP data packet including the critical data is not successfully sent, it determines to discard the later IP data packet, thereby improving data transmission efficiency.

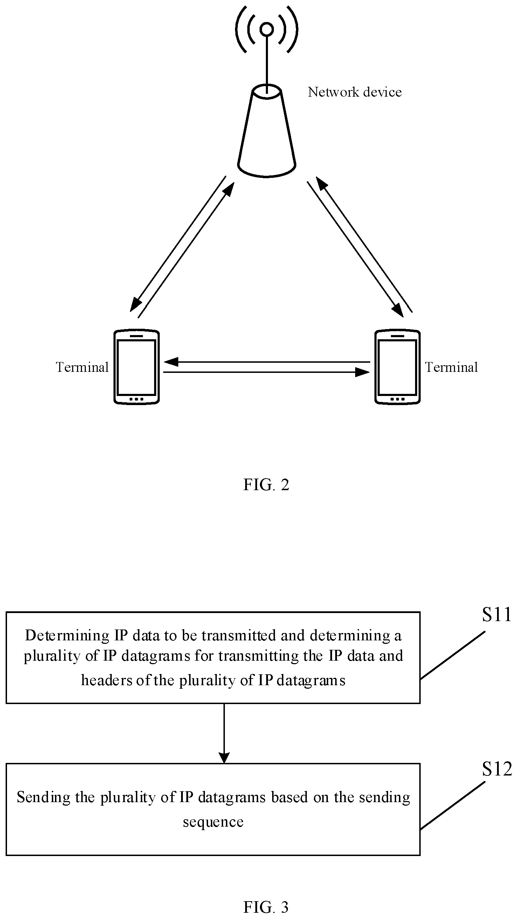

FIG. 2 is a diagram of a communication system architecture between a network device and a terminal according to an exemplary embodiment. A communication method provided by the present disclosure may be applied in the communication system architecture shown in FIG. 2. As shown in FIG. 2, the network side device may send signaling based on the architecture shown in FIG. 2.

It is to be understood that the communication system of the network device and the terminal shown in FIG. 2 is for schematic illustration only, and the wireless communication system may further include other network devices such as a core network device, a wireless relay device, and a wireless backhaul device, which are not shown in FIG. 2. The embodiment of the present disclosure does not limit the number of network devices and the number of terminals in the wireless communication system.

It is further to be understood that the wireless communication system of the embodiment of the present disclosure is a network providing a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. A network can be classified, according to capacity, rate, latency, and other factors of different networks, to be 2G (generation) network, 3G network, 4G network, or future evolution network such as a 5G network, which can also be referred to as a New Radio (NR) network. For ease of description, the wireless communication network may be referred to as a network sometimes in the present disclosure.

Further, the network device involved in the present disclosure may also be referred to as a wireless access network device. The wireless access network device may be a base station, an evolved node B (base station), a home base station, an access point (AP) in a wireless fidelity (WIFI) system, a wireless relay node, a wireless backhaul node, a transmission point (TP) or a transmission and reception point (TRP), may also be a gNB in a NR system, or may also be a component or a part of a device that constitutes a base station. The network device may also be an in-vehicle device in a vehicle to everything (V2X) communication system. It should be understood that the embodiment of the present disclosure does not limit the specific technology and the specific device form used for the network device.

Further, the terminal involved in the present disclosure, which may also be referred to as a terminal device, user equipment (UE), mobile station (MS), mobile terminal (MT) or the like., is a device that provides voice and/or data connectivity to a user, for example, the terminal may be a handheld device, an in-vehicle device or the like with a wireless connectivity function. Currently, some examples of terminals are a mobile phone, a pocket personal computer (PPC), a handheld computer, a personal digital assistant (PDA), a laptop computer, a tablet computer, a wearable device, an in-vehicle device or the like. In addition, the terminal device may also be an in-vehicle device in the vehicle to everything (V2X) communication system. It should be understood that the embodiment of the present disclosure does not limit the specific technology and the specific device form used for the terminal.

FIG. 3 is a flowchart of a method for transmitting data according to an exemplary embodiment. As shown in FIG. 3, the method for transmitting data is applied to a data sending side and include:
step S11, determining IP data to be transmitted and determining a plurality of IP datagrams for transmitting the IP data and headers of the plurality of IP datagrams, the headers including a sending sequence of the plurality of IP datagrams; and
step S12, sending the plurality of IP datagrams based on the sending sequence.

In an embodiment of the present disclosure, the data sending side generates corresponding data based on content that needs to be transmitted and determines IP data to be transmitted, and determines the plurality of IP datagrams required and the headers of the plurality of IP datagrams based on the generated data to be transmitted.

The sending sequence in which the plurality of IP datagrams are sent is determined according to the header of the IP datagram, and the plurality of IP datagrams including IP data are sent based on the sending sequence.

In an embodiment of the present disclosure, the data sending side may be a terminal or a network device.

In the method for transmitting data in the embodiment of the present disclosure, the IP datagrams are sent based on the sequence thereof, which ensures that the IP data that must be sent is sent efficiently, so as to determine the IP datagram to be sent subsequently, and to improve the efficiency of transmitting the IP data. Moreover, it may effectively prevent the sending of invalid IP data packets from resulting in wasting of transmission resource.

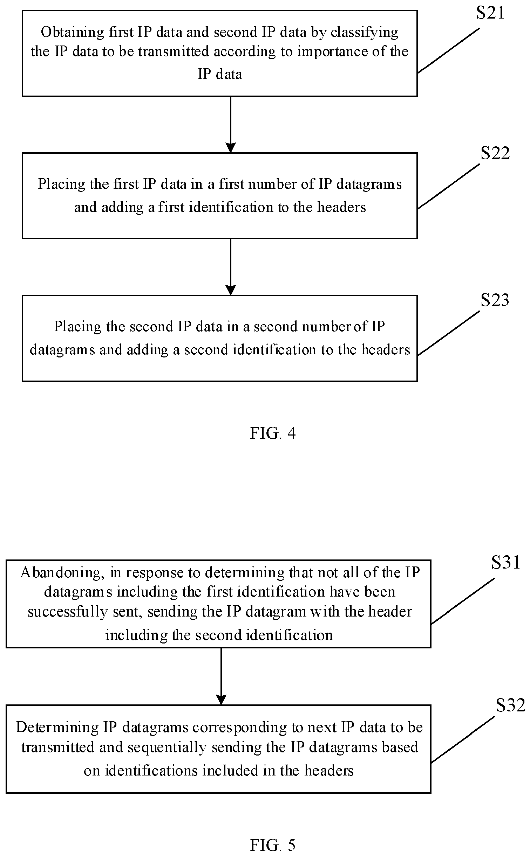

FIG. 4 is a flowchart of a method for transmitting data according to an exemplary embodiment. As shown in FIG. 4, the method for transmitting data is applied to a data sending side and includes:
step S21, obtaining first IP data and second IP data by classifying the IP data to be transmitted according to importance of the IP data, the importance of the first IP data being greater than the importance of the second IP data;
step S22, placing the first IP data in a first number of IP datagrams and adding a first identification to the headers, the first identification being configured to indicate that the IP data included in the IP datagram is the first IP data; and
step S23, placing the second IP data in a second number of IP datagrams and adding a second identification to the headers, the second identification being configured to indicate that the IP data included in the IP datagram is the second IP data.

In an embodiment of the present disclosure, before sending the IP data, the data sending side obtains the first IP data which is relatively important and the second IP data which is relatively unimportant by classifying the IP data to be transmitted according to importance of the IP data. That is, the importance of the first IP data is greater than the importance of the second IP data. Further, the first number of IP datagrams required for transmitting the first IP data and the second number of IP datagrams required for transmitting the second IP data are determined.

The first IP data are placed in the first number of IP datagram, and the first identification is added in the header to be labeled as important. The second IP data are placed in the second number of IP datagram, and the second identification is added in the header to be labeled as unimportant.

In an embodiment of the present disclosure, the sending side determines, based on the plurality of IP datagrams to be transmitted, the identifications included in the headers thereof, and sends the IP datagram with the header including the first identification before sending the IP datagram with the header including the second identification.

In an embodiment of the present disclosure, the IP data to be transmitted is determined based on the IP data generated, and the plurality of IP datagrams for transmitting the IP data is determined. The first IP data and second IP data are determined in the IP data to be transmitted by classifying the IP data to be transmitted according to importance thereof, where the importance of the first IP data is greater than the importance of the second IP data. The first number of IP datagrams for transmitting the first IP data are determined based on the first IP data, for example, the first number of IP datagrams is N IP datagrams, the first IP data are placed in the N IP datagrams, and the first identification is added in the N IP datagrams to indicate that the first number of IP datagrams are the IP datagrams which are relatively important. The second number of IP datagrams for transmitting the second IP data are determined based on the second IP data, for example, the second number of IP datagrams are M IP datagrams, the second IP data are placed in the M IP datagrams, and the second identification is added in the M IP datagrams to indicate that the second number of IP datagrams are the IP datagrams which are relatively unimportant. The first N IP datagrams are prioritized to be sent, that is, the IP datagram with the header including the first identification is sent before the IP datagram with the header including the second identification. The IP data are sent cyclically according to the determined sending sequence of the IP datagrams until all the data streams are sent successfully. For example, for a video service, after the IP data of a first image frame are sent sequentially, a second image frame is sent based on the sequence of the IP datagrams until the data sending for the video service is complete.

It is to be noted that N, M are positive integers and may be determined based on the IP data, i.e., the values of N, M may be fixed or variable.

FIG. 5 is a flowchart of a method for transmitting data according to an exemplary embodiment. As shown in FIG. 5, the method for transmitting data is applied in a data sending side and includes:

step S31, abandoning, in response to determining that not all of the IP datagrams including the first identification have been successfully sent, sending the IP datagram with the header including the second identification; and

step S32, determining IP datagrams corresponding to next IP data to be transmitted and sequentially sending the IP datagrams based on an identification included in the header.

In an embodiment of the present disclosure, as described above, the data sending side sends the plurality of IP datagrams based on the sequence of the IP datagrams determined, and the IP datagram with the header including the first identification is sent before the IP datagram with the header including the second identification. If not all of the IP datagrams including the first identification have been successfully sent, i.e., not all of the first IP data reaches the data receiving side, the data sending side determines to stop sending subsequent IP datagrams with the header including the second identification. In other words, the second number of IP datagrams is discarded when not all of the first number of IP datagrams have been sent successfully.

As in the above embodiment, by taking a video service as an example, if not all of the IP datagrams including the first identification of the current image frame of the video service have been sent successfully, the subsequent IP datagrams of the current frame are discarded, the IP datagrams including the first identification of the next image frame are sent, and so on, until the video service has been sent.

According to the IP datagrams corresponding to the next IP data to be transmitted, the data sending side re-determines the identification included in the IP datagram and sequentially sends the IP datagrams based on the identification.

In some embodiments of the present disclosure, the character of the identification for indicating the data type in the IP datagram may be an available character in the first portion of the header or may be an added character in the first portion of the header. That is, the character for indicating that the IP data included in the IP datagram is the first IP data, and the character for indicating that the IP data included in the IP datagram is the second IP data are located in the header of the IP datagram.

In an embodiment of the present disclosure, the header also includes a number of IP datagrams for currently transmitting the IP data and/or a number of IP datagrams for transmitting the first IP data. As described above, if the number of IP datagrams for transmitting the first IP data is N, the second number may be determined to be M based on the number of IP datagrams for transmitting the IP data included in the header. The data sending side may determine, based on the number N, whether all of the first IP data have been sent successfully or not and determine whether or not to continue to send the second number of IP data packets.

If the data sending side determines that not all of the first NIP datagrams have been sent successfully, it determines that the first IP data have not been sent successfully, i.e., the IP data which are relatively important have not been sent successfully, and determines to abandon sending the next M datagrams, i.e., it abandons sending the second IP data which are relatively unimportant. If the identification in the subsequent IP datagram is the first identification, it is determined that the subsequent IP datagram is resent based on that IP datagram.

In an embodiment of the present disclosure, the above implementations may be applied in various nodes in a wireless transmission environment or in various nodes in a wired transmission environment.

Based on the same concept, an embodiment of the present disclosure also provides a device for transmitting data.

It is to be understood that the device for transmitting data provided by an embodiment of the present disclosure includes a corresponding hardware structure and/or software module for performing respective functions, in order to achieve the above-described functions. In combination with the units and algorithmic steps of the various examples disclosed in the embodiments of the present disclosure, the embodiment of the present disclosure can be implemented in the form of hardware or a combination of hardware and computer software. Whether a particular function is performed as hardware or computer software driving hardware depends on the particular application and design constraints of the technical solution. A person skilled in the art may use a different manner for each particular application to implement the described functionality, but such implementation should not be considered as going beyond the scope of the technical solution of the embodiment of the present disclosure.

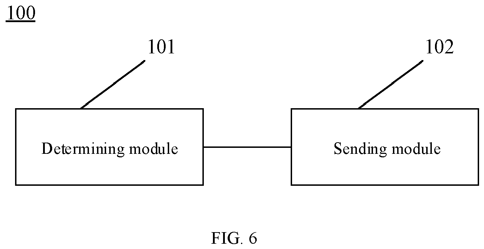

FIG. 6 is a block diagram of a device for transmitting data according to an example embodiment. Referring to FIG. 6, the device 100 for transmitting data is applied to a data sending side, and includes a determining module 101 and a sending module 102.

The determining module 101 is configured to determine IP data to be transmitted and determine a plurality of IP datagrams for transmitting the IP data and headers of the plurality of IP datagrams. The headers include a sending sequence of the plurality of IP datagrams. The sending module 102 is configured to send the plurality of IP datagrams based on the sending sequence.

In an embodiment of the present disclosure, the determining module 101 is configured to obtain first IP data and second IP data by classifying the IP data to be transmitted according to importance of the IP data. The importance of the first IP data is greater than the importance of the second IP data. The determining module 101 is configured to place the first IP data in a first number of IP datagrams and add a first identification to the headers. The first identification is configured to indicate that the IP data included in the IP datagram is the first IP data. The determining module 101 is configured to place the second IP data in a second number of IP datagrams and add a second identification to the headers. The second identification is configured to indicate that the IP data included in the IP datagram is the second IP data.

In an embodiment of the present disclosure, the sending module 102 is configured such that the IP datagram with the header including the first identification is sent before the IP datagram with the header including the second identification.

In an embodiment of the present disclosure, the sending module 116 is further configured to abandon, in response to determining that not all of the IP datagrams including the first identification have been successfully sent, sending the IP datagram with the header including the second identification; and determine IP datagrams corresponding to next IP data to be transmitted and sequentially send the IP datagrams based on the identification including in the header.

In an embodiment of the present disclosure, a first portion of the header includes a character for indicating the first identification or the second identification.

In an embodiment of the present disclosure, the header further includes at least one of a number of the plurality of IP datagrams or a number of IP datagrams transmitting important data.

With respect to the device in the above embodiments, the specific manner in which each module performs an operation has been described in detail in the embodiments relating to the method, which will not be described in detail herein.

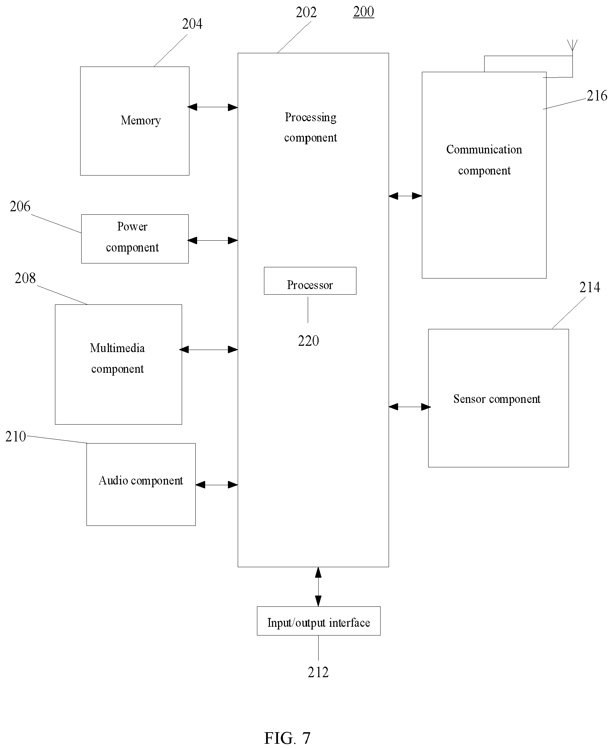

FIG. 7 is a block diagram of a device 200 for transmitting data according to an exemplary embodiment. For example, the device 200 may be a mobile phone, a computer, a digital broadcasting terminal, a messaging device, a game console, a tablet device, a medical device, a fitness device, a personal digital assistant, or the like.

Referring to FIG. 7, the device 200 may include one or more of a processing component 202, a memory 204, a power component 206, a multimedia component 208, an audio component 210, an input/output (I/O) interface 212, a sensor component 214, and a communication component 216.

The processing component 202 generally controls the overall operations of the device 200, such as operations associated with display, telephone calls, data communications, camera operations, and recording operations. The processing component 202 may include one or more processors 220 to execute instructions to complete all or part of the steps of the foregoing method. In addition, the processing component 202 may include one or more modules to facilitate interaction between the processing component 202 and other components. For example, the processing component 202 may include a multimedia module to facilitate the interaction between the multimedia component 208 and the processing component 202.

The memory 204 is configured to store various types of data to support the operation at the device 200. Examples of these data include instructions for any application or method operating on the device 200, contact data, phone book data, messages, pictures, videos and the like. The memory 204 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 206 provides power to various components of the device 200. The power component 206 may include a power management system, one or more power supplies, and other components associated with generating, managing, and distributing power for the device 200.

The multimedia component 208 includes a screen that provides an output interface between the device 200 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 208 includes a front camera and/or a rear camera. When the device 200 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 210 is configured to output and/or input audio signals. For example, the audio component 210 includes a microphone (MIC), and when the device 200 is in an operation mode, such as a call mode, a recording mode, and a voice recognition mode, the microphone is configured to receive an external audio signal. The received audio signal can be further stored in the memory 204 or sent via the communication component 216. In some embodiments, the audio component 210 further includes a speaker for outputting audio signals.

The I/O interface 212 provides an interface between the processing component 202 and a peripheral interface module. The above-mentioned peripheral interface module may be a keyboard, a click wheel, a button, and the like. These buttons may include but are not limited to home button, volume button, start button, and lock button.

The sensor component 214 includes one or more sensors for providing the device 200 with various aspects of state evaluation. For example, the sensor component 214 can detect the on/off status of the device 200 and the relative positioning of components. For example, the component is a display and keypad of the device 200. The sensor component 214 can also detect the position change of the device 200 or a component of the device 200, the presence or absence of contact between the user and the device 200, the orientation or acceleration/deceleration of the device 200, and the temperature change of the device 200. The sensor component 214 may include a proximity sensor configured to detect the presence of nearby objects when there is no physical contact. The sensor component 214 may also include a light sensor, such as a CMOS or CCD image sensor, for use in imaging applications. In some embodiments, the sensor component 214 may also include an acceleration sensor, a gyroscope sensor, a magnetic sensor, a pressure sensor, or a temperature sensor.

The communication component 216 is configured to facilitate wired or wireless communication between the device 200 and other devices. The device 200 can access a wireless network based on a communication standard, such as WiFi, 2G, or 3G, or a combination thereof. In an exemplary embodiment, the communication component 216 receives a broadcast signal or broadcast related information from an external broadcast management system via a broadcast channel. In an exemplary embodiment, the communication component 216 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 200 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An exemplary embodiment also provides a non-transitory computer-readable storage medium including instructions, such as the memory 204 including instructions, and the instructions may be executed by the processor 220 of the device 200 to complete the foregoing method. For example, the non-transitory computer-readable storage medium may be ROM, random access memory (RAM), CD-ROM, magnetic tape, floppy disk, optical data storage device and the like.

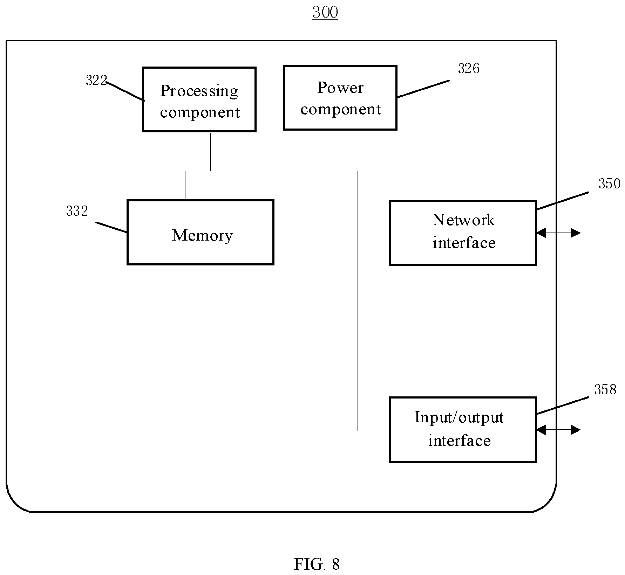

FIG. 8 is a block diagram of a device 300 for transmitting data according to an exemplary embodiment. For example, the device 300 may be provided as a server. Referring to FIG. 8, the device 300 includes a processing component 322 which further includes one or more processors, and a memory resource which is represented by a memory 332 and is configured for storing instructions such as application programs executable by the processing component 322. The application program stored in the memory 332 may include one or more modules each corresponding to a set of instructions. Furthermore, the processing component 322 is configured to execute instructions to perform any of the above methods.

The device 300 may also include a power component 326 configured to perform power management of the device 300, a wired or wireless network interface 350 configured to connect the device 300 to a network, and an input/output (I/O) interface 358. The device 300 may operate based on an operating system stored in memory 332, such as Windows Server^{™}, Mac OS X^{™}, Unix^{™}, Linux^{™}, Free BSD^{™} or the like.

It is further understood that the term "plurality" in the present disclosure means two or more, and other quantifiers are similar. The term "and/or", describing the association of associated objects, indicates that three relationships can exist, for example, A and/or B, which can indicate the presence of A alone, A and B together, and B alone. The character "/" generally indicates an "or" relationship between the preceding and following associated objects. The singular forms "a", "said" and "the" are also intended to include plural forms, unless the context clearly indicates otherwise.

It is further understood that the terms "first", "second" and the like are used to describe a variety of information, but that such information should not be limited to these terms. These terms are only used to distinguish information of the same type from one another and do not indicate a particular order or level of importance. In fact, the expressions "first" and "second" may be used interchangeably. For example, without departing from the scope of the present disclosure, first information may also be referred to as second information, and similarly, second information may also be referred to as first information.

It is further understood that although the operations are depicted in the accompanying drawings in a particular order in embodiments of the present disclosure, this should not be construed as requiring that the operations be performed in the particular order shown or in serial order, or that all of the operations shown be performed to obtain the desired results. Multitasking and parallel processing may be advantageous in particular environments.

Those skilled in the art may easily conceive of other embodiments of the present disclosure upon consideration of the specification and practice of the invention disclosed herein. The present disclosure is intended to cover any variations, uses, or adaptations of the present disclosure that follow the general principles of the present disclosure and include the common general knowledge or conventional technical means in the technical field not disclosed by the present disclosure. The specification and embodiments are to be regarded as exemplary only, with the true scope and spirit of the present disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A method for transmitting data, applied to a data sending side, comprising:
determining IP data to be transmitted and determining a plurality of IP datagrams for transmitting the IP data and headers of the plurality of IP datagrams, the headers comprising a sending sequence of the plurality of IP datagrams; and
sending the plurality of IP datagrams based on the sending sequence.

2. The method for transmitting data according to claim 1, wherein determining the plurality of IP datagrams and the headers of the IP datagrams based on the generated data comprises:
obtaining first IP data and second IP data by classifying the IP data to be transmitted according to importance of the IP data, the importance of the first IP data being greater than the importance of the second IP data;
placing the first IP data in a first number of IP datagrams and adding a first identification to the headers, the first identification being configured to indicate that IP data comprised in an IP datagram is the first IP data; and
placing the second IP data in a second number of IP datagrams and adding a second identification to the headers, the second identification being configured to indicate that IP data comprised in an IP datagram is the second IP data.

3. The method for transmitting data according to claim 2, wherein the sending sequence of the plurality of IP datagrams comprises that:
the IP datagram with the header comprising the first identification is sent before the IP datagram with the header comprising the second identification.

4. The method for transmitting data according to claim 3, further comprising:
abandoning, in response to determining that not all of the IP datagrams comprising the first identification have been successfully sent, sending the IP datagram with the header comprising the second identification; and
determining IP datagrams corresponding to next IP data to be transmitted and sequentially sending the IP datagrams based on an identification comprised in the header.

5. The method for transmitting data according to any one of claims 1 to 4, wherein a first portion of the header comprises a character for indicating the first identification or the second identification.

6. The method for transmitting data according to claim 1, wherein the header further comprises at least one of a number of the plurality of IP datagrams or a number of IP datagrams transmitting important data.

7. A device for transmitting data, applied to a data sending side, comprising:
a determining module, configured to determine IP data to be transmitted and determine a plurality of IP datagrams for transmitting the IP data and headers of the plurality of IP datagrams, the headers comprising a sending sequence of the plurality of IP datagrams; and
a sending module, configured to send the plurality of IP datagrams based on the sending sequence.

8. A device for transmitting data, comprising:
a processor; and
a memory for storing executable instructions of the processor,
wherein the processor is configured to perform the method for transmitting data according to any one of claims 1 to 6.

9. A non-transitory computer-readable storage medium, wherein when instructions in the storage medium are executed by a processor of a mobile terminal, the mobile terminal is caused to perform the method for transmitting data according to any one of claims 1 to 6.
